Europäisches Patentamt

European Patent Office

Office européen des brevets

(11) Publication number: **0 355 171**
**A1**

# EUROPEAN PATENT APPLICATION
## published in accordance with Art. 158(3) EPC

(21) Application number: 89901877.4

(22) Date of filing: 25.01.89

(86) International application number:
PCT/JP89/00066

(87) International publication number:
WO 89/07360 (10.08.89 89/18)

(51) Int. Cl.⁵: **H02K 5/20**

(30) Priority: 02.02.88 JP 21169/88

(43) Date of publication of application:
28.02.90 Bulletin 90/09

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KATSUZAWA, Yukio Fanuc Mansion**
**Harimomi 7-307**
**3539-1, Shibokusa, Oshino-mura**
**Minamitsuru-gun Yamanashi 401-05(JP)**
Inventor: **MASUYA, Michi Fanuc Dai-3**
**Vira-karamatsu**
**3527-1, Shibokusa, Oshino-mura**
**Minamitsuru-gun Yamanashi 401-05(JP)**

(74) Representative: **Mock, Hans et al**
**MARKS & CLERK Suite 301 Sunlight House**
**Quay Street**
**Manchester M3 3JY(GB)**

(54) PIPE JOINT STRUCTURE FOR COOLING PIPING OF LIQUID-COOLED MOTOR.

(57) This invention relates to a liquid-cooled motor wherein a cooling pipe is disposed in a case around the outer periphery of a stator core. A deformed O-ring (5) is formed in the periphery of a hole (40) having a deformed section on the end surface of the casing (1) and a round section hole (41) of housings (2, 3) is allowed to communicate with part of the hole (40) having a deformed section, and the casing (1) and the housings (2, 3) are fastened to one another. The present invention is applicable to liquid-cooled motors in general of which a small size, a high output and a high speed rotation are required.

Fig. 1(A)

## DESCRIPTION

TITLE OF THE INVENTION

Joint Construction of Cooling Pipes for Liquid Cooled Motor

TECHNICAL FIELD

The present invention relates to a joint construction of cooling pipes for a liquid cooled motor and is generally applied to a small liquid cooled motor which needs a high output and a large number of revolutions and which has pipes provided on a portion of a casing outside a stator core.

BACKGROUND ART

Since a liquid cooled motor has a high cooling efficiency and produces an output 1.5 – 2 times that of an air cooled motor having the same size, a conventional circulation system of a coolant has a surface area portion (deformed cross sectional hole having an increased circumferential surface area) provided on the portion of the casing outside the stator core to increase the cooling efficiency, so that pipes provided in a housing (front flange and rear bracket) which supports bearings at the opposite ends of the casing are connected to the deformed cross sectional hole to connect the casing and the housing. However, it is necessary to strictly seal the connecting portions to prevent leakage of the coolant thereby to increase the reliability of sealing against the leakage.

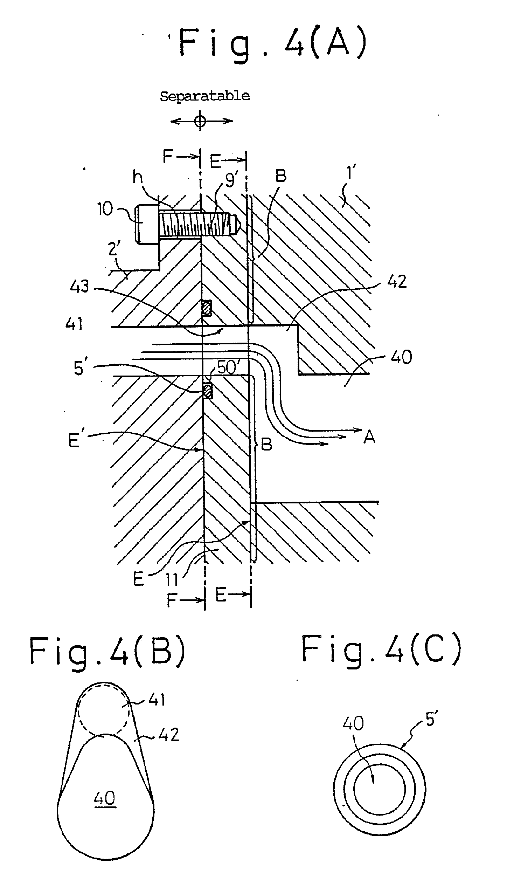

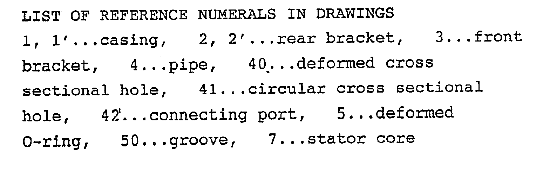

Figures 4(A), (B) and (C) show a conventional joint construction of cooling pipes. The casing 1' has a deformed cross sectional hole 40 to increase the cooling efficiency. The deformed cross sectional hole 40 has at its end a connecting port 42 laterally extending therefrom. The connecting end face E of the casing 1' is coated with an adhesive B having an oil sealing effect, so that a cover plate 11 having a circular sectional hole 43 is adhered thereto so as to make the hole 43 coincident with the connecting port 42. After that, an O-ring 5' is fitted in a groove 50' provided on the outer periphery of a hole 41 formed at a free end face E' of the cover plate 11, so that the circular cross sectional hole 43 of the housing (rear bracket) 2' coincides with the circular cross sectional hole 43 of the cover plate 11. After that, a bolt 10 is screwed into a threaded hole 9' of the cover plate 11 through a hole h of the bracket 2' to defined a circulation pipe line in which the pipes 40, 42, 43 and 41 are connected. The coolant oil flows as shown by arrows A.

In the improved prior art mentioned above, although an O-ring having an excellent oil seal effect is used, since the standard O-ring is applied in the form of a circle, both the connecting holes at the portion to which the O-ring is applied, i.e., at the connecting portion E' of the deformed cross sectional hole 40 and the circular cross sectional hole 41 must be of a circular cross section, resulting in usage of a cover plate 11 having connecting hole 43 having a circular cross section. Furthermore, it is necessary to provide the adhesive B on the end face of the casing 11' to connect the cover plate 11 thereto.

To realize a perfect oil sealing effect, the cover plate 11 is connected to the casing 11' by vacuum resin impregnation means. However, the application of the cover plate 11 is troublesome and costly.

The present invention solves the drawbacks mentioned above by providing a simple connecting construction of the deformed cross sectional hole of the casing and the circular cross sectional hole of the housing.

DISCLOSURE OF INVENTION

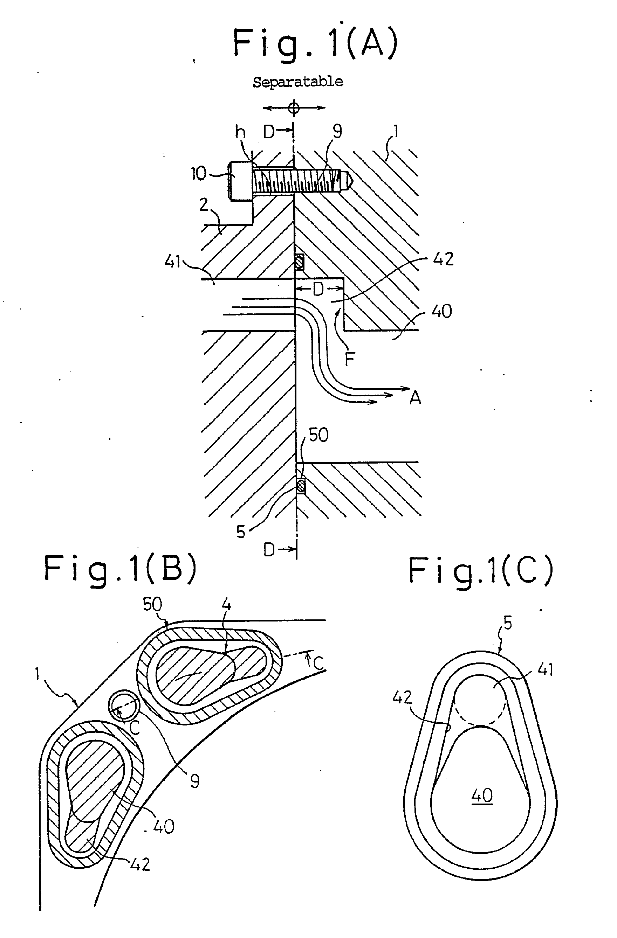

for instance, as shown in Figs. 1(A), (B) and (C), the deformed cross sectional hole 40 is formed in the casing 1, so that the deformed cross sectional hole 40 has at its end an connecting port 42 laterally extending therefrom. Around the connecting end port is provided a groove 50 in which a deformed O-ring 5 is fitted. The housing 2 is integrally connected to the casing 1, so that the circular cross sectional hole 41 of the housing 2 is coincident with the connecting port 42, by a bolt 10. Thus, the deformed cross sectional hole 40 of the casing 1 and the circular cross sectional hole of the housing 2 are connected to each other.

Since the casing 1 and the housing 2 are directly connected by the bolt 10, the conventional cover plate can be dispensed with. The usage of the deformed O-ring increases the freedom in shape of the pipes of the casing portion for cooling the stator, thus resulting in an realization of a casing of appropriate size.

The deformed O-ring makes it possible to perform a perfect seal with a single kind of seal member, resulting in simplification of the operation and steps of manufacturing.

Since the conventional cover plate (11 in Fig. 4(A)) can be omitted, a compact liquid cooled motor can be realized.

Since an optional shape of groove can be machined by a small diameter end mill ($\Phi 2 - \Phi 5$) of a numerical control machine tool, the freedom in designing the cross sectional shape of the stator cooling pipes of the casing is increased, so that the casing can be of optimum size.

BRIEF DESCRIPTION OF THE DRAWINGS

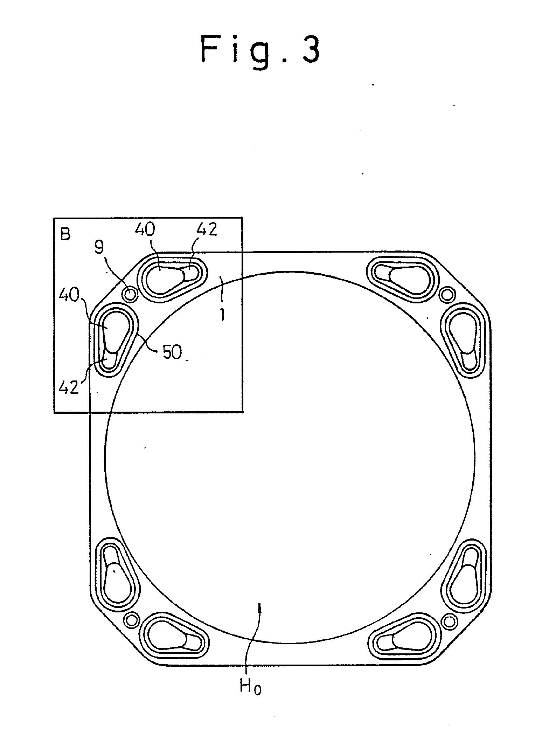

Each of Figures 1 show enlarged views of a main part of an embodiment of the present invention, of which Fig. 1(A) is an enlarged sectional view of a connecting portion of the casing and the housing, taken along the line C-C in Fig. 1(B), 1(B) is an enlarged view of the portion B in Fig. 3, and Fig. 1(C) is a sectional view taken along the line D-D in Fig. 1(A).

Fig. 2 is a schematic longitudinal sectional view of an embodiment of the present invention.

Fig. 3 is a sectional view taken along the line A-A in Fig. 2.

Fig. 4 are explanatory views of the prior art, of which Fig. 4(A) is an enlarged sectional view of a connecting portion of a casing and a housing, Fig. 4(B) is a sectional view taken along the line E-E in Fig. 4(A), and Fig. 4(C) is a sectional view taken along the line F-F in Fig. 4(A).

BEST MODE FOR CARRYING OUT THE INVENTION

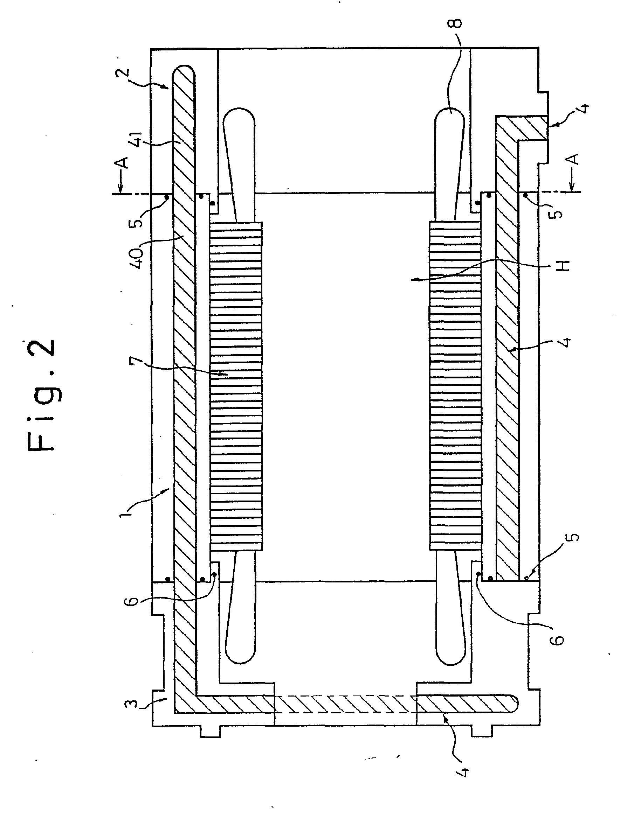

The present invention was applied to a liquid cooled type induction motor for driving a spindle of a machine tool. As shown in Fig. 2, a front flange 3 and a rear bracket 2 are secured to the opposite ends of the casing 1 which surrounds the stator core 7 having a rotor insertion hole H, so that a passage 4 for circulating the coolant oil is formed throughout the casing and the housing (the front flange 3 and the rear bracket).

As can be seen from Fig. 3, the casing 1 which is die-cast of aluminum alloy is substantially angular cylindrical having a hole $H_0$ for enclosing the stator core 7 and is provided on each of its four corners with a pair of deformed cross sectional holes 40 extending therethrough. As shown in Figs. 1(A), (B) and (C), the connecting ports 42 having a depth of D are formed at the ends of the deformed cross sectional holes 40 by an end mill. The grooves 50 which are analogous to the openings of the ends of the deformed cross sectional holes 40 which are formed around the openings by a two-axis synchronous numerical control machine tool.

The front flange 3 and the rear bracket 2 as the housing are same as those of the prior art having the circular cross sectional holes 41.

Upon assembly, after the deformed O-rings (NBR) 5 of oilproof rubber are fitted in the grooves 50, the front flange 3 and the rear bracket 2 are brought into contact with each other, so that they are fixed to each other by the bolts 10 which are screwed in the threaded holes 9 of the casing through the holes h. Numeral 6 designates common O-rings which are used as auxiliary means, and numeral 8 designates a coil end. In the joint construction thus obtained, the coolant oil flows in the direction shown by the arrows A, similarly to the pipes (passage) of the prior art. The bottom surface F of the connecting ports 42 contributes to a smooth diffusion of the flow from the circular cross sectional holes 41 toward the deformed cross sectional holes 40. The deformed O-rings 5 ensures a perfect oil seal.

In the illustrated embodiment, since the conventional cover plate 11 shown in Fig. 4 can be dispensed with, no step for connecting the cover plate 11 to the end of the casing is necessary in the course of manufacturing, resulting in a remarkably simplified manufacturing process.

## CLAIMS

1. A joint construction of cooling pipe lines in a liquid cooled motor characterized in that deformed O-rings (5) are provided around the circumferential edges of a deformed cross sectional hole (40) at ends of a casing (1), and circular cross sectional holes (41) of a housing (2, 3) are connected to parts of the deformed cross sectional hole (40) to connect the casing (1) and the housing (2, 3).

2. A joint construction of cooling pipe lines in liquid cooled motor according to claim 1, wherein said circular cross sectional holes (41) are connected to connection parts (42) which laterally extend from the deformed cross sectional hole (40).

# Fig. 1(A)

Separatable

# Fig.1(B)

# Fig.1(C)

# Fig.2

EP 0 355 171 A1

# Fig. 3

# Fig. 4(A)

Separatable

# Fig. 4(B)

# Fig. 4(C)

LIST OF REFERENCE NUMERALS IN DRAWINGS
1, 1'...casing,   2, 2'...rear bracket,   3...front
bracket,   4...pipe,   40...deformed cross
sectional hole,   41...circular cross sectional
hole,   42'...connecting port,   5...deformed
O-ring,   50...groove,   7...stator core

# INTERNATIONAL SEARCH REPORT

International Application No  PCT/JP89/00066

## I. CLASSIFICATION OF SUBJECT MATTER (if several classification symbols apply, indicate all) 6

According to International Patent Classification (IPC) or to both National Classification and IPC

Int.Cl$^4$    H02K5/20

## II. FIELDS SEARCHED

| Minimum Documentation Searched 7 | |
| --- | --- |
| Classification System ı | Classification Symbols |
| IPC | H02K5/20, 9/19 |

| Documentation Searched other than Minimum Documentation to the Extent that such Documents are Included in the Fields Searched 8 | |
| --- | --- |
| Jitsuyo Shinan Koho | 1950 – 1989 |
| Kokai Jitsuyo Shinan Koho | 1972 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
| --- | --- | --- |
| A | JP, A, 60-121941 (Fanuc Ltd.) 29 June 1985 (29. 06. 85) Page 246, upper right column, line 18 to page 247, lower right column, line 1 (Family: none) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
| --- | --- |
| April 18, 1989 (18. 04. 89) | May 1, 1989 (01. 05. 89) |

| International Searching Authority | Signature of Authorized Officer |
| --- | --- |
| Japanese Patent Office | |

Form PCT/ISA/210 (second sheet) (January 1985)